# EUROPEAN PATENT APPLICATION

(11) **EP 4 506 787 A1**
(43) Date of publication of application: **12.02.2025**
(21) Application number: 23838849.0
(22) Date of filing: 07.07.2023
(51) Int. Cl.: G06F 3/01, H04N 21/431, H04N 21/472

(54) **VIBRATION REMINDING METHOD, RELATED DEVICE, AND COMPUTER STORAGE MEDIUM**

(30) Priority: 14.07.2022 CN 202210838656
(71) Applicant: Tencent Technology (Shenzhen) Company Limited, Shenzhen, Guangdong 518057 (CN)
(72) Inventor: XU, Shili, Shenzhen, Guangdong 518057 (CN); GAO, Lina, Shenzhen, Guangdong 518057 (CN); YANG, Yiqing, Shenzhen, Guangdong 518057 (CN); LIU, Siliang, Shenzhen, Guangdong 518057 (CN); HONG, Kai, Shenzhen, Guangdong 518057 (CN)
(74) Representative: Nederlandsch Octrooibureau
(86) International application number: PCT/CN2023/106239
(87) International publication number: WO 2024/012357

(57) **Abstract**

A vibration reminding method, a related device, and a computer storage medium. The method comprises: acquiring a target playing control from a multimedia interface (S201); acquiring, from at least two pieces of indication information of the target playing control, function indication information and control indication information of the target playing control, wherein the control indication information represents a playing control mode utilized when the target playing control performs playing control on the multimedia interface (S202); performing vibration encoding processing on the target playing control on the basis of the function indication information, so as to obtain function encoding information of the target playing control, and performing vibration encoding processing on the target playing control according to the control indication information, so as to obtain control encoding information of the target playing control (S203); and using the function encoding information and the control encoding information as vibration encoding information of the target playing control, so as to use vibration, which is output on the basis of the vibration encoding information, to give a reminder that the target playing control has been selected (S204).

## Description

### RELATED APPLICATION

This application claims priority to Chinese Patent Application No. 202210838656.5 entitled "VIBRATION REMINDING METHOD, RELATED DEVICE, AND COMPUTER STORAGE MEDIUM" and filed with the China National Intellectual Property Administration on July 14, 2022, which is incorporated herein by reference in its entirety.

### FIELD OF THE TECHNOLOGY

The disclosure relates to the field of computer technologies, and in particular, to a vibration reminding method, a related device, and a computer storage medium.

### BACKGROUND OF THE DISCLOSURE

With continuous development of computer technologies, playing media data based on a computer device has become a current development trend for media data playing. However, currently, to facilitate playing control of the media data by a corresponding user, reminding of playing control performed by the corresponding user on a multimedia interface is generally performed, to avoid a misoperation of the corresponding user. In the related art, the reminding of the playing control is implemented by reading the multimedia interface.

### SUMMARY

An embodiment of the disclosure provides a vibration reminding method, including:
obtaining a play control from a multimedia interface, the multimedia interface comprising at least one play control, and the play control being a play control in the at least one play control with at least two pieces of indication information in the at least one play control;
determining function indication information and control indication information of a play control from the at least two pieces of indication information of the play control, the function indication information indicating a function of the play control while performing playing control at the multimedia interface, and the control indication information of the play control indicating a playing control manner used when the play control performs playing control in the multimedia interface;
performing vibration data encoding based on the function indication information, to obtain function encoding information of the play control, and performing vibration data encoding based on the control indication information, to obtain control encoding information of the play control; and
setting the function encoding information and the control encoding information as vibration encoding information of the play control, and outputting a corresponding vibration based on the vibration encoding information, to prompt, through the outputted vibration, that the play control has been selected.

An embodiment of the disclosure provides a vibration reminding apparatus, including:
an obtaining unit, configured to obtain a play control from a multimedia interface, the multimedia interface comprising at least one play control, and the play control being a play control in the at least one play control with at least two pieces of indication information in the at least one play control,
the obtaining unit being further configured to determine function indication information and control indication information of a play control from the at least two pieces of indication information of the play control, the function indication information indicating a function of the play control while performing playing control at the multimedia interface, and the control indication information of the play control indicating a playing control manner used when the play control performs playing control in the multimedia interface;
an encoding unit, configured to: perform vibration data encoding based on the function indication information, to obtain function encoding information of the play control, and perform vibration data encoding based on the control indication information, to obtain control encoding information of the play control; and
a processing unit, configured to: set the function encoding information and the control encoding information as vibration encoding information of the play control, and output a corresponding vibration based on the vibration encoding information, to prompt, through the outputted vibration, that the play control has been selected.

An embodiment of the disclosure provides a computer device, including: a processor, an output device, and a memory, the processor, the output device, and the memory being interconnected, the memory being configured to store a computer program supporting the computer device to perform the foregoing method, the computer program including program instructions, and the processor being configured to invoke the program instructions, to perform the following operations:
obtaining a play control from a multimedia interface, the multimedia interface comprising at least one play control, and the play control being a play control in the at least one play control with at least two pieces of indication information in the at least one play control;
determining function indication information and control indication information of a play control from the at least two pieces of indication information of the play control, the function indication information indicating a function of the play control while performing playing control at the multimedia interface, and the control indication information of the play control indicating a playing control manner used when the play control performs playing control in the multimedia interface;
performing vibration data encoding based on the function indication information, to obtain function encoding information of the play control, and performing vibration data encoding based on the control indication information, to obtain control encoding information of the play control; and
setting the function encoding information and the control encoding information as vibration encoding information of the play control, and outputting a corresponding vibration based on the vibration encoding information, to prompt, through the outputted vibration, that the play control has been selected.

An embodiment of the disclosure provides a computer storage medium, having program instructions stored therein, the program instructions, when executed by a processor, being configured for performing the foregoing vibration reminding method.

### BRIEF DESCRIPTION OF THE DRAWINGS

To describe technical solutions of the embodiments of the disclosure more clearly, the following briefly describes the accompanying drawings required for describing the embodiments. Apparently, the accompanying drawings in the following description show some embodiments of the disclosure, and a person of ordinary skill in the art may still derive other drawings from these accompanying drawings without creative efforts.
FIG. 1a is a schematic diagram of a control display area in a multimedia interface according to an embodiment of the disclosure.
FIG. 1b is a schematic flowchart of displaying a play control based on a trigger operation on another play control according to an embodiment of the disclosure.
FIG. 1c is a schematic flowchart of performing a trigger operation on a play control according to an embodiment of the disclosure.
FIG. 2 is a schematic flowchart of a vibration reminding method according to an embodiment of the disclosure.
FIG. 3 is a schematic diagram of an application procedure of a vibration reminding method according to an embodiment of the disclosure.
FIG. 4 is a schematic flowchart of another vibration reminding method according to an embodiment of the disclosure.
FIG. 5a is a flowchart of encoding a play control according to an embodiment of the disclosure.
FIG. 5b is a schematic diagram of a mode control displayed in a control display area according to an embodiment of the disclosure.
FIG. 6a is a schematic diagram of a tactile sensing array according to an embodiment of the disclosure.
FIG. 6b is a schematic diagram of a braille spelling manner according to an embodiment of the disclosure.
FIG. 7 is a schematic flowchart of performing a deselection operation on a play control according to an embodiment of the disclosure.
FIG. 8 is a schematic diagram of a structure of a vibration reminding apparatus according to an embodiment of the disclosure.
FIG. 9 is a schematic diagram of a structure of a computer device according to an embodiment of the disclosure.

### DESCRIPTION OF EMBODIMENTS

In the related art, playing of media data is generally interrupted due to a manner of screen reading. Embodiments of the disclosure provide a vibration reminding method, which can effectively perform playing control, avoid interruption of playing of media data during performing the playing control, and improve playing efficiency.

The embodiments of the disclosure provide a vibration reminding method. After obtaining a target play control of a composite type from a multimedia interface, a computer device may further obtain function indication information and control indication information from at least two pieces of indication information of the target play control. In this way, vibration data encoding can be performed based on the obtained function indication information, to obtain function encoding information of the target play control, vibration data encoding can be performed based on the obtained control indication information, to obtain control encoding information of the target play control, and finally the function encoding information and the control encoding information can be used as vibration encoding information of the target play control. In this way, when the target play control is selected, a corresponding vibration can be outputted based on the vibration encoding information of the target play control, to prompt that the target play control is selected, causing the computer device to implement playing control reminding without affecting the multimedia interface to perform media data playing. In this way, effectiveness and flexibility of the playing control reminding performed by the computer device are improved. In addition, because the vibration encoding information of the target play control is obtained through vibration data encoding based on the at least two pieces of indication information, encoding information of the target play control is enriched, so that effective distinguishing between the target play control and another play control in the multimedia interface can be guaranteed, so that a corresponding operating user can effectively distinguish between play controls in the multimedia interface based on vibrations outputted by different selected play controls, thereby improving user stickiness on the multimedia interface. The multimedia interface is an interface supporting playing of various multimedia data, the multimedia data may be one or both of video data and audio data, and to improve diversity of performing multimedia data playing on the multimedia interface, the multimedia interface may further display one or more play controls configured to perform playing control on the multimedia data. In addition, the play control of the composite type is a play control including at least two pieces of indication information in the play controls included in the multimedia interface, and the target play control referred to in the embodiments of the disclosure is any one of play controls of the composite type included in the multimedia interface.

In some embodiments, the indication information is information configured for describing a function of the target play control, or information configured for describing a playing control manner of the media data. In other words, the indication information may specifically include the function indication information configured for describing a control function, and the control indication information configured for describing a control manner. Each play control included in the multimedia interface has a function of performing playing control on the media data. In other words, each play control in the multimedia interface includes a piece of corresponding function indication information. In the multimedia interface, a same function may correspond to a plurality of play controls, or one play control may correspond to a plurality of functions. Therefore, after encoding is performed on a corresponding play control based on only function encoding information of the play control, a corresponding operating object still cannot effectively distinguish between different play controls based on vibrations outputted after the encoding, and the plurality of play controls corresponding to the same function, and the play control corresponding to the plurality of functions may be considered as the foregoing play control of the composite type. In this case, to ensure that an operating user can effectively distinguish between different play controls of the compound type based on the vibrations outputted after the encoding, when performing vibration data encoding on the play control of the composite type, the vibration data encoding need to be performed with reference to the function indication information of the corresponding play control in combination with the control indication information describing the manner of performing playing control on the play control of the composite type, so that the function encoding information obtained through encoding based on the function indication information and the control encoding information obtained through encoding based on the control indication information are used as the vibration encoding information of the corresponding play control of the composite type.

In some embodiments, for a play control that may be effectively distinguished directly according to a function in the multimedia interface, the play control may be encoded directly based on function encoding information of the play control. The computer device encodes each play control in the multimedia interface, so that the corresponding operating user can effectively distinguish each play control directly based on vibration output after the encoding. In some embodiments, the vibration encoding information about the play control obtained by the computer device is configured for specifying a vibration encoding parameter and a corresponding value that are used when the computer device performs vibration. Specifically, the vibration encoding information includes one or more vibration encoding parameters and a parameter value of a corresponding vibration encoding parameter. The vibration encoding parameter may be one or more of vibration intensity, a vibration frequency, or vibration duration. Based on each vibration encoding parameter and the corresponding parameter value, the computer device may determine a corresponding vibration waveform, to output a vibration based on the vibration waveform. In addition, the computer device may perform vibration output directly based on the vibration encoding parameter and the corresponding parameter value that are included in the vibration encoding information. Performing the vibration output based on the vibration encoding information is driving, based on the vibration encoding parameter and the corresponding value that are specified in the vibration encoding information, a motor of the computer device to vibrate.

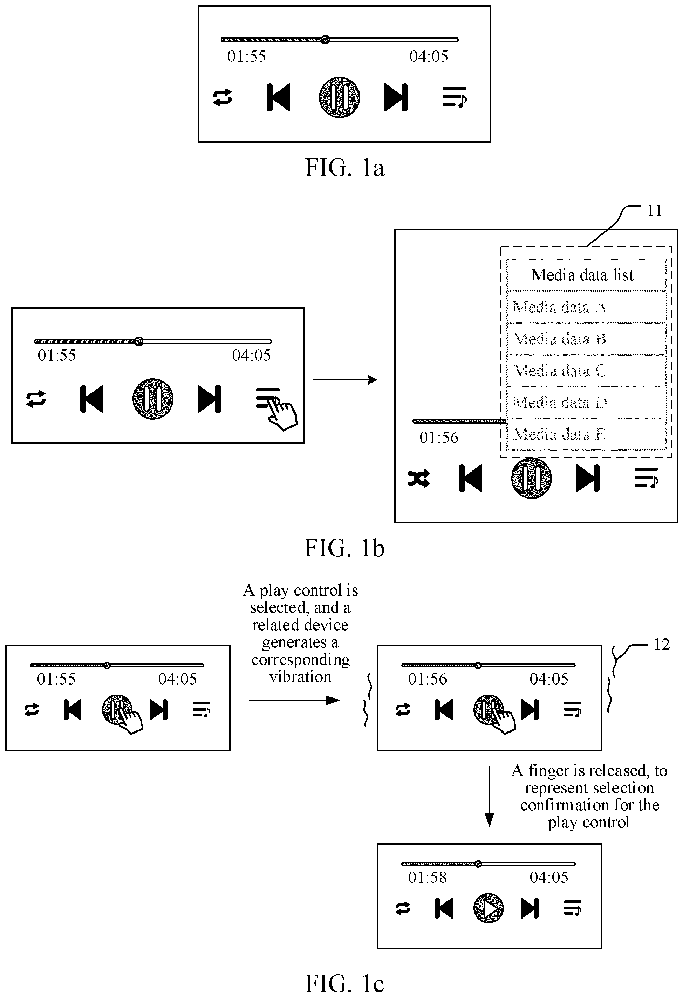

In some embodiments, the play control included in the multimedia interface includes a control component directly displayed in a control display area of the multimedia interface. The control display area may be shown in FIG. 1a. In this case, the play control included in the multimedia interface includes any control shown in FIG. 1a. In addition, the play control further includes a control component displayed based on triggering of a specified play control in the control display area. For example, the play control included in the multimedia interface may be, as shown in FIG. 1b, a component triggered to be displayed after a list component directly displayed in the control display area is selected. The component triggered after the list component is selected may be displayed in a display area marked by 11 shown in FIG. 1b.

The computer device may output, based on the play control displayed in the multimedia interface and the vibration encoding information set for each play control, a corresponding vibration after the operating user selects the corresponding play control, to remind the operating user of the currently selected play control by using the outputted vibration. The operating user may be a visually impaired user. The operating user may select the play control through touch movement or sequential selection. That a specified play control is selected means that a play control is considered as being selected only when a current touch moves to a display location of a corresponding play control and a selection confirmation is performed. Specifically, when the touch moves to the display location of the corresponding play control, the play control is not triggered to perform playing control on the multimedia interface, and a secondary confirmation (or the selection confirmation) of the operating user needs to be further obtained before it is determined that the play control is selected. After it is determined that the play control is selected, the playing control is performed on the multimedia interface based on the play control, and the secondary confirmation may be specifically a touch-lift operation. A specific process may be shown in FIG. 1c. A wavy line marked by 12 in FIG. 1c is configured for representing a vibration outputted by the computer device based on the play control currently selected by the touch movement. In other words, after a play/pause control displayed in the control display area is selected, the computer device outputs a vibration based on vibration encoding information of the play/pause control, to remind the corresponding operating user that the play/pause control has been selected. If the operating user expects to perform playing control on the multimedia interface by using the play/pause control, the touch-lift operation may be performed. In this case, the computer device may perform playing control according to a function of the play/pause control when the touch-lift operation is obtained.

In some embodiments, the operating user performs the secondary confirmation operation when determining, based on the vibration outputted by the computer device, that the playing control needs to be performed by using the play control corresponding to the vibration. However, after the computer device outputs the vibration, if it is determined that there is no need to perform the playing control by using the play control corresponding to the vibration, deselection of the corresponding play control may be implemented by continuing the touch movement and moving to a blank area (namely, an area without displaying any play control) of the multimedia interface.

In some embodiments, the computer device may be a terminal device. The terminal device may include, but is not limited to, any one or more of the following: a mobile phone, a computer (for example, a tablet computer, a laptop computer, or a desktop computer), an in-vehicle terminal, an intelligent voice interaction device, a smart home appliance (for example, a smart refrigerator, a smart television, a smart speaker, or a smart light fixture), an aircraft, or the like. In addition, the computer device may be a server. The server may be an independent physical server, or may be a server cluster or a distributed system formed by a plurality of physical servers, or the server may be a cloud server that provides a cloud service, a cloud database, cloud computing, a cloud function, cloud storage, a network service, cloud communication, a middleware service, a domain name service, a security service, a content delivery network (CDN), and a basic cloud computing service such as big data and an artificial intelligence platform. In addition, the computer device may be a built-in processor in a server or a built-in processor in a terminal device, or an external processing device.

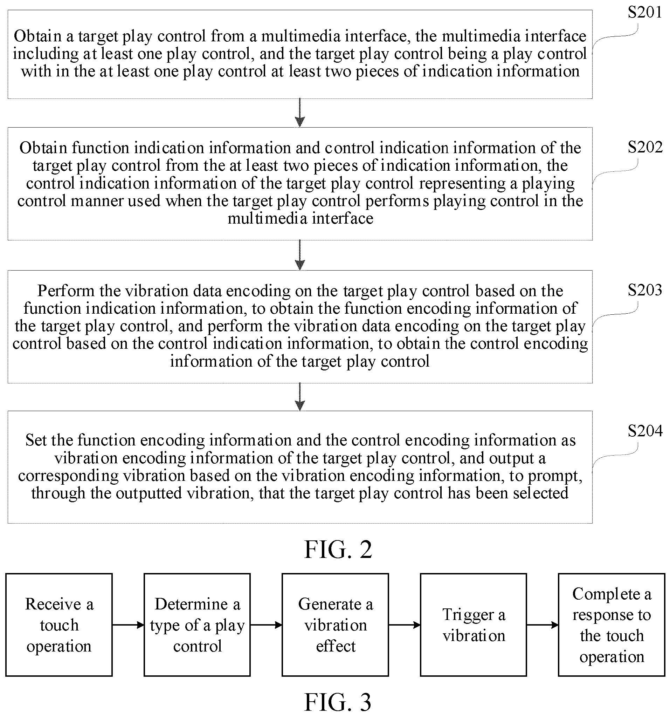

FIG. 2 is a schematic flowchart of a vibration reminding method according to some embodiments of the disclosure, and the method may be performed by the foregoing computer device. As shown in FIG. 2, the method may include the following operations.

S201: Obtain a target play control from a multimedia interface, the multimedia interface including at least one play control, and the target play control being a play control with in the at least one play control at least two pieces of indication information.

In some embodiments, the target play control is any one of play controls of a composite type included in the multimedia interface. The play control is a component that may be configured to perform playing control on media data in the multimedia interface. To implement efficient playing control on the multimedia interface, a plurality of play controls with different control functions may be displayed in the multimedia interface, and based on the different control functions in the multimedia interface, most of the play controls displayed in the multimedia interface are play controls in one or more of the following types: a playing function type, a progress bar type, a mode control type, or a name (for example, a song list) type. The play control of the playing function type may be specifically a control that controls playing previous media data, a control that controls playing next media data, or a control that pauses or starts playing of media data. The play control of the progress bar type may be specifically a control that supports quick progress jumping, or a control that supports progress dragging. The play control of the mode control type may be specifically a mode control supporting switching of different play modes, while the play control of the name type may be a list control and may be a name control of media data.

In the plurality of play controls included in the multimedia interface, for a play control of a single control function, a corresponding operating object may effectively distinguish between different play controls directly according to control of the control function of the play control on the multimedia interface. Therefore, a play control that can be distinguished according to control of a control function thereof on the multimedia interface may be referred to as a play control of a single type, while a play control whose control on the multimedia interface cannot be determined directly according to a control function thereof may be referred to as a play control of a composite type. In some embodiments, the play control of the composite type may be specifically the foregoing name control or mode control of the media data; and the play control of the single type may be the foregoing play control of the progress bar type, the play/pause control, or the like. The play control of the single type can be distinguished based on the control function thereof. Therefore, when performing vibration data encoding on the play control of the single type, the computer device may perform the vibration data encoding on different play controls of the single type directly based on function indication information corresponding to the play control of the single type. However, because the play control of the composite type cannot be distinguished according to only the control function, when the computer device performs the vibration data encoding on the play control of the composite type, the vibration data encoding needs to be performed based on a plurality of pieces of different indication information with reference to function indication information of the play control of the composite type and further with reference to other indication information of the play control of the composite type, to obtain corresponding vibration encoding information. The play control of the composite type therefore is the play control with two pieces of indication information, and different play controls of the composite type may be effectively distinguished based on the two pieces of indication information.

In some embodiments, the play control of the composite type further includes at least control indication information besides the function indication information, and the control indication information may indicate a playing control manner in which a user performs playing control on the multimedia interface through the play control of the composite type. The playing control manner is a type of performing the playing control on the multimedia interface. For example, if the play control of the composite type is the mode control, then the playing control manner indicated by the control indication information is a circulation mode used when the playing control is performed on the multimedia interface. The operating object can effectively distinguish the play control of the composite type only after the vibration data encoding is performed on the function indication information and the control indication information of the play control of the composite type However, for the play control of the single type, to further improve diversity of vibration output reminding of the play control of the single type, even if the operating object may effectively distinguish between different play controls of the single type directly according to the control function, the playing control manner when the play control of the single type performs playing control on the multimedia interface may still be used as the function indication information of the play control of the single type, thereby performing the vibration data encoding on the corresponding play control of the single type by using the function indication information. For example, when the play control of the single type is the play control of the progress bar type, the vibration data encoding may be performed not only based on a function of the play control of the progress bar type, but also based on a playing control manner when the play control of the progress bar type performs the playing control. The playing control manner when the play control of the progress bar type performs the playing control may be controlling playing progress to jump to corresponding time of media data. In other words, any play control in the multimedia interface may be regarded as a play control of the composite type.

In some embodiments, when the any play control in the multimedia interface is selected, whether the any play control is the mode control is determined; when it is determined that the any play control is the mode control, the any play control is determined as the target play control, and one or both of a current circulation mode and a next circulation mode in the multimedia interface are used as control indication information of the any play control; or when it is determined that the any play control is the name control, the any play control is determined as the target play control, and a data name of the media data indicated by the name control is used as control indication information of the any play control.

S202: Obtain function indication information and control indication information of the target play control from the at least two pieces of indication information, the control indication information of the target play control representing a playing control manner used when the target play control performs playing control in the multimedia interface.

In some embodiments, the function indication information of the target play control is configured for representing a role or function of the target play control performing playing control at the multimedia interface. The function indication information may be configured for performing vibration data encoding on the target play control to obtain function encoding information, and the function encoding information is configured for causing the computer device to output a vibration to remind the operating user of the control function of the selected target play control, while the control indication information is configured for performing the vibration data encoding on the target play control to obtain corresponding control encoding information, and the control encoding information may be configured for causing the computer device to output a vibration to remind the operating user of the playing control manner used when the selected target play control performs the playing control in the multimedia interface. Because in actual application, the operating object may distinguish between different play controls better based on the function indication information and the control indication information, the operating user may effectively distinguish the target play control and another play control after the computer device performs vibration data encoding on the target play control based on the function indication information and the control indication information.

In some embodiments, because at least one piece of function indication information and one or more pieces of control indication information are included in the at least two pieces of indication information included in the target play control, the computer device obtains a part of or all of the included one piece of function indication information and the one or more pieces of control indication information when obtaining the function indication information and the control indication information from the at least two pieces of indication information of the target play control to perform the vibration encoding, thereby performing the vibration data encoding on the target play control based on the obtained function indication information and control indication information. When the target play control is the mode control, the one or more pieces of control indication information included in the mode control include information indicating a current circulation mode and information indicating a next circulation mode. In this case, the computer device may encode the mode control based on only the function indication information and the control indication information indicating the current circulation mode (namely, two pieces of indication information); or encode the mode control based on only the function indication information and the control indication information indicating the next circulation mode; or encode the mode control based on three pieces of indication information: the function indication information, the indication information indicating the current circulation mode, and the indication information indicating the next circulation mode.

In some embodiments, the target play control includes a name control, one name control corresponds to one piece of media data in the multimedia interface, and function indication information of the name control is configured for indicating to control, when the name control is selected, the multimedia interface to play the media data corresponding to the name control; and control indication information of the name control is configured for representing to control reminding, by outputting a vibration, the operating user of a name of the media data corresponding to the selected target play control.

In some embodiments, the target play control includes a mode control, and function indication information of the mode control is configured for indicating to switch, when the mode control is selected, one or more circulation modes supported by the multimedia interface; and control indication information of the mode control is configured for representing one or both of the following: performing, in the multimedia interface, playing control on media data in the multimedia interface by using a circulation mode currently indicated by the mode control; or performing, in the multimedia interface, playing control on the media data in the multimedia interface by using a next circulation mode indicated by the mode control.

S203: Perform the vibration data encoding on the target play control based on the function indication information, to obtain the function encoding information of the target play control, and perform the vibration data encoding on the target play control based on the control indication information, to obtain the control encoding information of the target play control.

In some embodiments, if the target play control is the name control, obtained control encoding information of the name control includes name encoding information of the media data corresponding to the name control; and the performing the vibration data encoding on the target play control based on the control indication information, to obtain the control encoding information of the target play control includes: obtaining a name of the media data corresponding to the name control, and determining a tactile sensing array set corresponding to the name of the media data, the name of the media data including one or more representation characters, and each representation character being represented by an expression status corresponding to each sensing point in one or more tactile sensing arrays in the tactile sensing array set; and separately encode the tactile sensing arrays in the tactile sensing array set based on the expression status of each sensing point in each tactile sensing array in the tactile sensing array set, to obtain the name encoding information of the media data corresponding to the name of the media data.

In some embodiments, the expression status of each sensing point in the tactile sensing array is a convex state or a concave state; and the separately encoding the tactile sensing arrays in the tactile sensing array set based on the expression status of each sensing point in each tactile sensing array in the tactile sensing array set includes: obtaining a forming manner of sensing points in any tactile sensing array in the tactile sensing array set, and sequentially numbering the sensing points in the any tactile sensing array based on the forming manner, to obtain sequence numbers corresponding to the sensing points; and obtaining, based on an expression status of each sensing point in the any tactile sensing array, a sequence number corresponding to a sensing point whose expression status is the convex state, and encoding the any tactile sensing array based on the obtained sequence number.

In some embodiments, a forming manner of the sensing points in the tactile sensing array is a forming manner of three rows and two columns, and the expression status of each sensing point in the tactile sensing array is a convex state or a concave state; and the separately encoding the tactile sensing arrays in the tactile sensing array set based on the expression status of each sensing point in each tactile sensing array in the tactile sensing array set includes: obtaining a preset vibration encoding parameter for each row of sensing points in any tactile sensing array in the tactile sensing array set, the preset vibration encoding parameter for each row of sensing points including any one of vibration intensity, a vibration frequency, or vibration duration, and vibration encoding parameters for sensing points at different rows being different; determining, based on the expression status of each sensing point in the any tactile sensing array, a parameter value corresponding to the vibration encoding parameter for each row of sensing points; generating a reference vibration waveform for each column in the any tactile sensing array based on a vibration encoding parameter and a parameter value that correspond to each sensing point in each column in the any tactile sensing array; and using the reference vibration waveform for each column in the any tactile sensing array as name encoding information corresponding to the any one tactile sensing array. In some embodiments, the target play control includes a mode control, and function indication information of the mode control is configured for indicating to switch, when the mode control is selected, one or more circulation modes supported by the multimedia interface; and control indication information of the mode control is configured for representing one or both of the following: performing, in the multimedia interface, playing control on media data in the multimedia interface by using the circulation mode currently indicated by the mode control; or performing, in the multimedia interface, playing control on the media data in the multimedia interface by using the next circulation mode indicated by the mode control.

In some embodiments, if the target play control is the mode control, obtained control encoding information of the mode control includes: mode encoding information corresponding to any circulation mode in the one or more circulation modes supported by the multimedia interface; and the performing vibration data encoding on the target play control based on the control indication information, to obtain control encoding information of the target play control includes: obtaining a vibration encoding parameter and a corresponding parameter value that are preset for the one or more circulation modes supported by the multimedia interface; generating a target vibration waveform based on the obtained vibration encoding parameter and corresponding parameter value, the vibration encoding parameter including one or more of vibration intensity, a vibration frequency, or vibration duration; and generating, based on the target vibration waveform, the mode encoding information of any circulation mode supported by the multimedia interface.

In some embodiments, the circulation mode supported by the multimedia interface is a mode of cyclically playing media data added to a playlist, and the one or more circulation modes include a part of or all of a single circulation mode, a list circulation mode, or a random circulation mode; and the generating, based on the target vibration waveform, the mode encoding information of any circulation mode supported by the multimedia interface includes: obtaining a quantity of target vibration waveforms required for the any circulation mode supported by the multimedia interface, quantities of target vibration waveforms required for different circulation modes supported by the multimedia interface being different; and using a corresponding quantity of target vibration waveforms as the mode encoding information of the any circulation mode.

S204: Set the function encoding information and the control encoding information as vibration encoding information of the target play control, and output a corresponding vibration based on the vibration encoding information, to prompt, through the outputted vibration, that the target play control has been selected.

In some embodiments, an information interval between the function encoding information and the control encoding information is obtained; and associative splicing is performed on the function encoding information and the control encoding information based on the information interval, and encoding information obtained through the associative splicing is used as the vibration encoding information corresponding to the target play control.

In the operation S203 and the operation S204, a process of performing the vibration data encoding based on the function indication information and the control indication information separately is a process of determining the corresponding vibration encoding parameter and the corresponding parameter value based on the function indication information and the control indication information separately. In some embodiments, the vibration encoding parameter may be one or more of the vibration intensity, the vibration frequency, or the vibration duration. Therefore, the vibration encoding information obtained by the computer device may include one or more vibration encoding parameters and a parameter value corresponding to each vibration encoding parameter. The computer device may determine a corresponding vibration waveform based on the vibration encoding parameter and the corresponding parameter value that are included in the vibration encoding information, and output a vibration based on the vibration waveform. In some embodiments, the vibration encoding parameter and corresponding parameter value that are included in the vibration encoding information may be stored in a vibration description file, and the computer device may output a vibration based on the vibration encoding parameter and the corresponding parameter value in the vibration description file.

After the computer device stores the vibration encoding parameter and the corresponding parameter value that are included in the vibration encoding information as the vibration description file, the vibration encoding parameter and the corresponding parameter value may be described in the vibration description file by using code shown below.

```
             hqh_main_ver// encoding version number;
             if(hgh_main_ver==1)
               hqh_count// included vibration segment
               for(i=0;i<hqh_count;i++)
                   hqh_haptics_insit// vibration intensity, where 0 is for no vibration, 1 is for
 minimum vibration intensity supported by a current device, and 100 is for a strongest vibration;
                   hqh_haptics_freq// vibration frequency, where a unit is Hz, and 0 is for no
                   vibration; and
                   hqh_haptics_dura// vibration lasting time (or referred to as vibration
 duration), where a unit is millisecond.
```

In some embodiments, if the target play control is the mode control, and the current playing control manner in which the mode control performs playing control on the multimedia interface is playing in a random circulation mode, a vibration waveform indicated by corresponding function encoding information obtained by the computer device based on the function indication information of the mode control is a short high-intensity vibration waveform, and corresponding vibration encoding parameters and corresponding values are that the vibration intensity is 90, the vibration frequency is 20 Hz, and the vibration duration is 50 ms. Therefore, description of the function encoding information in the vibration description file of the mode control may be: {90, 20, 50}, to represent that the control is the mode control. Further, because the current playing control manner in which the mode control performs playing control on the multimedia interface is playing in the random circulation mode, the control encoding information generated by the computer device based on the control indication information may include three high-frequency short vibrations. A vibration encoding parameter and a parameter value that correspond to each high-frequency short vibration are that the vibration intensity is 50, the vibration frequency is 80 Hz, and the vibration duration is 100 ms. Therefore, the encoding information obtained through specific encoding on the mode control and recorded in the vibration description file is as follows:
{90, 20, 50}// configured for representing a short high-intensity vibration waveform, and representing that this is the mode control;
{0, 0, 100}// a vibration interval of 100 ms, where vibration interval duration may be changed to any other non-negative value, for example, 0 ms;
{50, 80, 100} {0, 0, 100}
{50, 80, 100} {0, 0, 100}
{50, 80, 100}// configured for representing three consecutive high-frequency short vibrations, and representing that the current circulation mode is the random circulation mode.

In some embodiments, when the computer device performs the vibration data encoding on the target play control based on the function indication information, it is necessary to ensure that the function encoding information obtained through encoding different function indication information is different. To obtain different function encoding information when the computer device encodes the play control with different function indication information, for example, the computer device may set the vibration encoding parameter, the parameter value, and the vibration waveform for each play control in the multimedia interface according to a vibration encoding rule shown in Table 1, to perform the vibration data encoding on each playing space in the multimedia interface, to obtain the function encoding information of the play control.

**Table 1**

| Play control | Vibration waveform description | Vibration intensity | Vibration frequency (Hz) | Vibration duration (ms) |
|---|---|---|---|---|
| Previous song | A crisp short vibration | 20 | 90 | 50 |
| Next song | A crisp short vibration (distinguishable from the "previous song" through intensity and a relative location) | 80 | 90 | 50 |
| Play/Pause | A rich long vibration | 50 | 20 | 200 |
| Progress bar | Two rich short vibrations | 50 | 30 | 50 |
| | | | | 50 |
| Current playing progress | Two crisp short vibrations | 50 | 80 | 50 |
| | | | | 50 |
| Song list | Two crisp long vibrations | 50 | 80 | 200 |
| | | | | 200 |
| Name control | Two rich long vibrations | 50 | 30 | 200 |
| | | | | 200 |
| Mode control | A deep short high-intensity vibration | 90 | 20 | 50 |

Based on the vibration encoding rule shown in Table 1, it can be seen that the computer device describes the vibration waveform by using three vibration encoding parameters including the vibration intensity, the vibration frequency, and the vibration duration, and corresponding parameter values, so that the vibration encoding rule shown in Table 1 can be understood that the computer device generates the vibration waveform for the corresponding play control according to the three vibration encoding parameters and the corresponding parameter values. For example, for the play control "previous song" in the multimedia interface, the computer device generates a vibration waveform corresponding to the play control "previous song" based on parameter information that the vibration intensity is 20, the vibration frequency is 90 Hz, and the vibration duration is 50 ms. Based on Table 1, it can be seen that the computer device sets different vibration waveforms for the play controls with different functions, so that the computer device can output different vibrations based on the different vibration waveforms, increasing a difference of the different play controls in tactile sensing. In this way, when selecting the different play controls, the operating user can distinguish between the play controls based on the different vibrations outputted by the computer device, effectively improving user experience of the operating user.

In some embodiments, after obtaining the function encoding information and the control encoding information of the target control, the computer device may directly use the two pieces of encoding information as the vibration encoding information of the target play control, and output, based on the two pieces of encoding information separately, the vibration for reminding. In some embodiments, the computer device may first perform information splicing on the two pieces of encoding information, then use spliced encoding information as the vibration encoding information of the target play control, and output, according to the spliced encoding information, the vibration for reminding. In some embodiments, the splicing on the function encoding information and the control encoding information by the computer device may be a process of adding a corresponding vibration interval between vibrations corresponding to the function encoding information and the control encoding information. The added vibration interval may be 100 ms, or may be 50 ms, or the like. Based on the addition of the vibration interval, the different vibrations outputted by the computer device may be effectively distinguished, so that effectiveness of corresponding vibration output can be improved.

In some embodiments, the process that the computer device performs encoding based on the indication information of the play control in the multimedia interface to obtain the vibration encoding information of the corresponding play control may be performed after the computer device detects that a touch operation is performed on the play control. In this case, for a procedure that the computer device outputs the vibration corresponding to the play control, for example, refer to FIG. 3. After receiving the touch operation, the computer device determines a type (for example, a single type or a composite type) of the play control on which the touch operation is performed, and then selects a corresponding encoding manner according to the type of the play control to encode the play control to obtain the vibration encoding information, and then the computer device outputs the corresponding vibration based on the vibration encoding information to complete a response to the foregoing touch operation.

In some embodiments of the disclosure, the computer device may determine the function indication information and the control indication information from the at least two pieces of indication information included in the target play control of the composite type, to perform the vibration data encoding on the target play control based on the function indication information and the control indication information separately to obtain the corresponding function encoding information and the control encoding information, and when the target play control is selected, the vibration is outputted according to the function encoding information and the control encoding information separately to remind the operating user that the target play control is selected, so that the computer device implements effective reminding of the selected play control without interrupting playing of the media data in the multimedia interface. In addition, because the vibration encoding information of the target play control is obtained through the vibration data encoding based on the at least two pieces of indication information, the vibration encoding information of the target play control includes rich information related to the play control, which may ensure that the vibration encoding information of the different target play controls is different, thereby ensuring that the vibrations outputted based on the vibration encoding information of the different target play controls are different, so that the operating user can effectively distinguish between the different play controls based on the different received vibrations, thereby making a prompt emitted by the computer device to the operating user more accurate and effective, and improving accuracy of vibration reminding performed by the computer device.

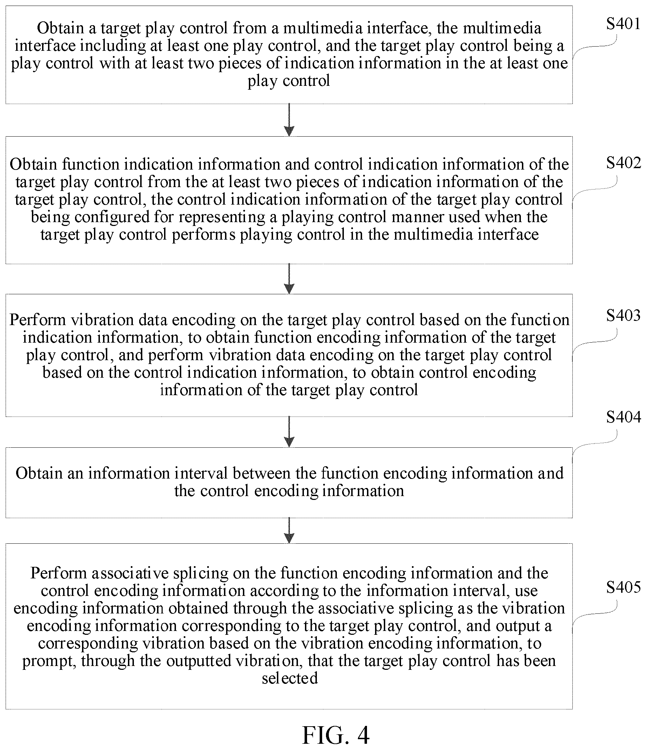

FIG. 4 is a schematic flowchart of another vibration reminding method according to some embodiments of the disclosure. As shown in FIG. 4, the method may include the following operations.

S401: Obtain a target play control from a multimedia interface, the multimedia interface including at least one play control, and the target play control being a play control with at least two pieces of indication information in the at least one play control.

In some embodiments, when type dividing is performed on the at least one play control in the multimedia interface according to a quantity of indication information included in the play control, the play control in the multimedia interface may be divided into a play control of a composite type and a play control of a single type. At least two pieces of indication information exist in the play control of the composite type, while only one piece of indication information exists in the play control of the single type. In a general case, a mode control and a name control in the multimedia interface are generally used as the play controls of the composite type, and another play control other than the mode control and the name control in the multimedia interface is used as the play control of the single type. Therefore, the target play control is any one of the mode control or the name control.

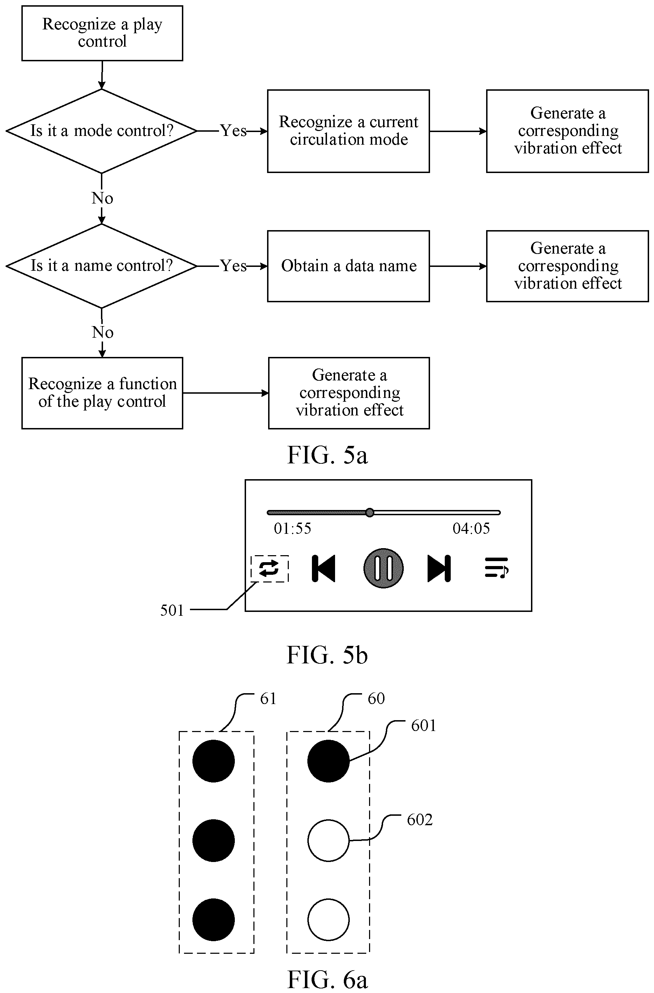

In some embodiments, a manner in which the computer device obtains the target play control may be understood in combination with a flowchart shown in FIG. 5a. For example, when any play control in the multimedia interface is selected, the computer device may identify the play control, to determine whether the play control is the mode control. When the computer device determines that the play control is the mode control, the computer device may perform vibration data encoding on the play control as the target play control to obtain corresponding vibration encoding information, or further output a corresponding vibration effect based on the vibration encoding information after detecting a trigger operation for the target play control. In some embodiments, if the computer device determines that the play control is not the mode control, the computer device may instead determine whether the play control is the name control, and when determining that the play control is the name control, the computer device use the play control as the target play control to perform the vibration data encoding on the target play control to obtain the corresponding vibration encoding information, or further output the corresponding vibration effect.

S402: Obtain function indication information and control indication information of the target play control from the at least two pieces of indication information of the target play control, the control indication information of the target play control being configured for representing a playing control manner used when the target play control performs playing control in the multimedia interface.

In some embodiments, when the target play control is the mode control, the at least two pieces of indication information of the mode control may specifically include one piece of function indication information and at least one piece of control indication information, and the function indication information of the mode control is configured for representing that when the mode control is selected, the computer device switches one or more circulation modes supported by the multimedia interface. The circulation mode supported by the multimedia interface is a mode in which the computer device cyclically play media data added to a playlist. The one or more circulation modes supported by the multimedia interface may include a part of or all of a single circulation mode, a list circulation mode, or a random circulation mode. The single circulation mode is cyclically playing media data currently played in the multimedia interface, the list circulation mode is cyclically playing in a playing order of the media data in the corresponding playlist, and the random circulation mode is switching from currently played media data to any other media data in the playlist for playing. The control indication information of the mode control may include one or both of the following:
(1) performing, in the multimedia interface, playing control in the multimedia interface by using a circulation mode currently indicated by the mode control; or
(2) performing, in the multimedia interface, playing control in the multimedia interface by using a next circulation mode indicated by the mode control.

When the multimedia interface supports a plurality of circulation modes, a switching order of the plurality of circulation modes may be preset. The computer may use only the currently indicated circulation mode as the function indication information for encoding. In some embodiments, the switching order of the plurality of circulation modes supported by the multimedia interface may also be unordered. In this case, the mode control may use the currently indicated circulation mode and/or the next circulation mode as the function indication information for encoding. The mode control may be a control marked by 501 in FIG. 5b.

In some embodiments, this target play control may be the name control, and one name control corresponds to one piece of media data in the multimedia interface. The media data in the multimedia interface is media data that can be played on the multimedia interface, and is not specifically media data that is currently in a presentation state, for example, media data that is currently being played. The at least two pieces of indication information of the name control may include one piece of function indication information and one piece of control indication information, and the function indication information of the name control represents that, when the name control is selected, the computer device controls the multimedia interface to play media data corresponding to the name control. The control indication information of the name control is configured for controlling how to remind an operating user of a name of the media data corresponding to the selected target play control by outputting a vibration in the multimedia interface. Therefore, the computer device may obtain control encoding information including name encoding information by performing vibration data encoding on the name control based on the control indication information of the name control.

S403: Perform vibration data encoding on the target play control based on the function indication information, to obtain function encoding information of the target play control, and perform vibration data encoding on the target play control based on the control indication information, to obtain control encoding information of the target play control.

In some embodiments, when the target play control is the mode control, control encoding information corresponding to the mode control may include mode encoding information. The mode encoding information is related to the circulation mode indicated by the mode control. Therefore, when the mode control indicates different circulation modes, the control encoding information generated by the computer device is also different, so that the computer device can control a device in which the multimedia interface is located to output correspondingly different vibrations, to enable the operating user to accurately distinguish, according to the outputted vibrations, between different functions performed by the mode control. In some embodiments, the mode encoding information may also be configured for indicating a vibration encoding parameter and a corresponding parameter value. Therefore, on the contrary, the computer device may generate the mode encoding information based on the vibration encoding parameter and the corresponding parameter value. The mode encoding information is related to the circulation mode indicated by the mode control, and therefore the vibration encoding parameter set by the computer device for the mode control is also related to the circulation mode indicated by the mode control. The circulation mode indicated by the mode control may be any of the foregoing one or more circulation modes. In other words, the computer device may preset a corresponding vibration encoding parameter and a parameter value for any circulation mode supported by the computer device, so that the computer device can generate the corresponding mode encoding information for the mode control in a manner of obtaining the corresponding vibration encoding parameter and the parameter value. In some embodiments, a manner in which the computer device outputs the vibration may be generating a corresponding vibration waveform based on the vibration encoding parameter and the parameter value in the encoding information, thereby outputting the vibration based on the vibration waveform. To ensure that the computer device can quickly output the corresponding vibration after detecting a selection operation for the play control, the computer device may directly generate the vibration waveform based on the vibration encoding parameter and the parameter value after obtaining the vibration encoding parameter and the parameter value that are preset and correspond to the circulation mode, so that the encoding information can include the vibration waveform. In some embodiments, the computer device may generate the mode encoding information based on the vibration waveform. The computer device may specifically generate the mode encoding information corresponding to any circulation mode in the following manner: The computer device obtains the vibration encoding parameter and the corresponding parameter value that are set for the any circulation mode, and generates a target vibration waveform corresponding to the any circulation mode based on the obtained vibration encoding parameter and the corresponding parameter value, so that the computer device can generate the mode encoding information corresponding to the any circulation mode based on the target vibration waveform.

Because the single circulation mode, the list circulation mode, or the random circulation mode is essentially configured for representing the circulation mode of the media data during playing, to reduce complexity of the encoding information to reduce workload of the computer device during the vibration encoding, the computer device may set a same vibration encoding parameter for different circulation modes, so that the different circulation modes can be represented based on a same target vibration waveform, but additionally, to facilitate distinguishing the different circulation modes, the computer device may set different quantities for the different circulation modes, so that the mode encoding information generated by the computer device based on the different circulation modes is represented by different quantities of target vibration waveforms. For example, the target vibration waveform is set to a high-frequency short vibration waveform, which may be described with vibration intensity of 50, a vibration frequency of 80 Hz, and vibration duration of 100 ms. Based on this, for the single circulation mode, the list circulation mode, and the random circulation mode in the circulation modes, the computer device may set one target vibration waveform for the single circulation mode, set two target vibration waveforms for the list circulation mode, and set three target vibration waveforms for the random circulation mode.

Certainly, in other implementations of the disclosure, the computer device may set different vibration encoding parameters for different circulation modes so that the computer device can generate different target vibration waveforms for the different circulation modes, and the computer device can further set different quantities of target vibration waveforms for the different circulation modes, to enhance differentiation of mode encoding information generated in the different circulation modes. This is not limited and described in detail in this embodiment of the disclosure.

Therefore, the mode encoding information in some embodiments of the disclosure is obtained based on the target vibration waveform of the corresponding circulation mode, and each circulation mode has a preset quantity of corresponding target vibration waveforms. Therefore, for any circulation mode in the one or more circulation modes supported by the multimedia interface, the computer device is to obtain, when generating the mode encoding information corresponding to the any circulation mode, a quantity of target vibration waveforms required for the any circulation mode (or referred to as a quantity of target vibration waveforms required for generating the corresponding mode encoding information), so that the computer device can use the corresponding quantity of target vibration waveforms as the mode encoding information of the any circulation mode, thereby implementing generating different mode encoding information for the different circulation modes.

In a process in which the computer device uses the corresponding quantity of target vibration waveforms as the mode encoding information corresponding to the any circulation mode, if a plurality of quantities of target vibration waveforms are required for generating the mode encoding information, the computer device may combine the plurality of target vibration waveforms at a specified time interval before using the target vibration waveforms as the mode encoding information of the any circulation mode. In some embodiments, when the quantity of target vibration waveforms required for the computer device to generate the mode encoding information corresponding to the random circulation mode is 3, and the target vibration waveform is a high-frequency short vibration waveform with vibration intensity of 50, a vibration frequency of 80 Hz, and vibration duration of 100 ms, the mode encoding information corresponding to the random circulation mode is obtained by combining the 3 high-frequency short vibration waveforms, and there may be a vibration interval waveform between every two high-frequency short vibration waveforms, to implement adding a time interval of 100 ms between every two high-frequency short vibration waveforms. In this case, the mode encoding information may be specifically: {50, 80, 100}, {0, 0, 100}, {50, 80, 100}, {0, 0, 100}, and {50, 80, 100}. {50, 80, 100} is configured for indicating the high-frequency short vibration waveform, and {0, 0, 100} is configured for indicating the vibration interval waveform. Certainly, in some embodiments, the computer device may directly use the obtained plurality of target vibration waveforms as the mode encoding information corresponding to the any circulation mode. This is not limited and described in detail in this embodiment of the disclosure.

In some embodiments, when the target play control is the name control, the control encoding information of the target play control may include the name encoding information of the media data corresponding to the name control, and the computer device may obtain the name encoding information of the name control in the following manner: The computer device obtains a data name of the media data corresponding to the name control, and determines one or more tactile sensing arrays corresponding to the data name, so that the computer device can encode each tactile sensing array based on an expression status of each sensing point in each tactile sensing array, to obtain the name encoding information of the media data corresponding to the data name. The data name of the media data may be, for example, a song name of a song, or a video name, a singer name, or a song name corresponding to a music video (MV). During obtaining the name encoding information, the computer device may encode each representation character included in the data name, to obtain encoding information corresponding to representation character, and then use encoding information of all representation characters included in the data name as the name encoding information of the data name. When the computer device uses encoding information of a plurality of representation characters as the name encoding information, the computer device may add vibration interval information (or an information interval) between encoding information corresponding to different representation characters, and the vibration interval information is configured for outputting a vibration time interval, so that the operating user can more easily distinguish between the different representation characters based on the sensed vibration time interval, effectively improving use experience of a use object. For the computer device, the addition of the vibration interval waveform also facilitates detection of accuracy of the generated encoding information by the computer device, which may effectively improve processing efficiency of the computer device.

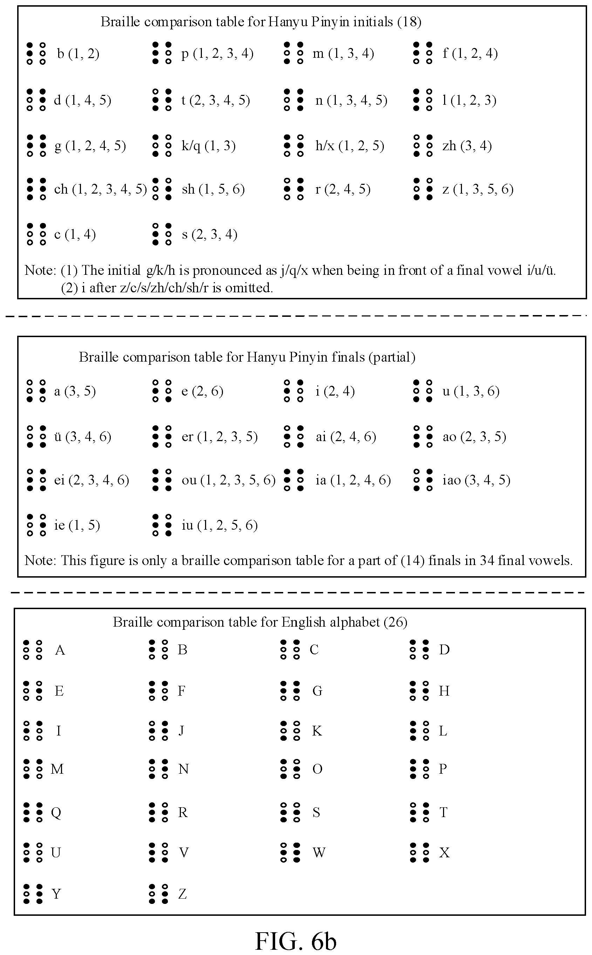

The data name of the media data may include one or more representation characters, and one representation character may be represented by the expression status corresponding to each sensing point in the one or more tactile sensing arrays. The representation character may include one or more of a Chinese character, a letter, or a number. The tactile sensing array may be shown in FIG. 6a. The tactile sensing array may be formed by six dots arranged in a specified arrangement manner, each dot is a sensing point, and each sensing point has a corresponding expression status. For example, the expression status of the sensing point may be a convex state (a black dot in the tactile sensing array, for example, a sensing point marked by 601) or a concave state (a white dot in the tactile sensing array, for example, a sensing point marked by 602). In a specific implementation, the tactile sensing array may be determined according to a braille spelling manner of a corresponding representation character, and for example, when the representation character is a Chinese character, the braille spelling manner of the representation character may be determined according to a braille spelling manner corresponding to Hanyu Pinyin of the Chinese character, and for a part of the braille spelling manner, refer to FIG. 6b.

In some embodiments, the computer device may encode any tactile sensing array in the following manner: The computer device first obtains a forming manner of the sensing points in the tactile sensing array, and the forming manner may indicate one or more of the following information: a quantity of sensing points forming the tactile sensing array, the expression status of each sensing point, and an arrangement manner (or a relative location relationship) between the sensing points. After obtaining the forming manner, the computer device may sequentially number the sensing points in the tactile sensing array based on the forming manner, to obtain sequence numbers corresponding to the sensing points. For example, for the tactile sensing array shown in FIG. 6a, the computer device may divide the tactile sensing array into two columns, and then the sensing point points of a left column (a column marked by 61 in FIG. 6a) are numbered 1, 2, 3 in sequence from top to bottom; and correspondingly, the sensing point points of a right column (a column marked by 60 in FIG. 6a) are numbered 4, 5, 6 in sequence from top to bottom. In this case, the computer device may further obtain, according to the expression status of each sensing point in the tactile sensing array, a sequence number corresponding to a sensing point whose expression status is the convex state, so that the computer device can encode the tactile sensing array based on the obtained sequence number. In some embodiments, the computer device obtains a sequence number corresponding to a sensing point whose expression status is the concave state, and encodes the tactile sensing array based on the obtained sequence number. This is not limited in some embodiments of the disclosure, but is described below by using the convex state as an example.

An implementation in which the computer device generates the encoding information of the representation character is described in detail below with reference to a specific example. It is assumed that the data name includes a representation character " 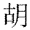 " (Hanyu Pinyin thereof is: hu), and then " 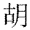 " may be represented by a tactile sensing array corresponding to Hanyu Pinyin h and a tactile sensing array corresponding to Hanyu Pinyin u. It is not difficult to see from the braille spelling manner shown in FIG. 6b that, sequence numbers of sensing points whose expression statuses are convex states in the tactile sensing array corresponding to h include 1, 2, and 5, and sequence numbers of sensing points whose expression statuses are convex states in the tactile sensing array corresponding to u include 1, 3, and 6. In this case, the computer device may perform encoding for the representation character based on the sequence numbers in a sequence number sequence (1, 2, 5) and the sequence numbers in a sequence number sequence (1, 3, 6), to obtain encoding information of the character " 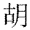 ".

In some embodiments, the forming manner of the sensing points in any tactile sensing array may be a forming manner (namely, a forming manner of the sensing points in the tactile sensing array shown in FIG. 6a) of two rows and three columns. In addition, the computer device may set one vibration encoding parameter for each row of sensing points, and the vibration encoding parameter set for each row of sensing points is any one of the vibration intensity, the vibration frequency, or the vibration duration. The vibration encoding parameters set for sensing points in different rows are different, and the parameter values set for different expression statuses of a same sensing point are different. For example, the vibration encoding parameters and the corresponding parameter values set by the computer device for the sensing points may be as follows:
(1) First row of sensing points (namely, sensing points with a sequence number 1 and a sequence number 4): The vibration encoding parameter set by the computer device is the vibration intensity, and when the expression status of any sensing point is the convex state, the parameter value correspondingly indicated by the sensing point is 80, and when the expression status of any sensing point is the concave state, the parameter value correspondingly indicated by the sensing point is 20. Vice versa.
(2) Second row of sensing points (namely, sensing points with a sequence number 2 and a sequence number 5): The vibration encoding parameter set by the computer device is the vibration frequency, and when the expression status of any sensing point is the convex state, the parameter value correspondingly indicated by the sensing point is 100 Hz, and when the expression status of any sensing point is the concave state, the parameter value correspondingly indicated by the sensing point is 300 Hz. Vice versa.
(3) Third row of sensing points (namely, sensing points with a sequence number 3 and a sequence number 6): The vibration encoding parameter set by the computer device is the vibration duration, and when the expression status of any sensing point is the convex state, the parameter value correspondingly indicated by the sensing point is 300 ms, and when the expression status of any sensing point is the concave state, the parameter value correspondingly indicated by the sensing point is 100 ms. Vice versa.

In this case, the computer device may encode any tactile sensing array in the following manner: The computer device obtains the vibration encoding parameter set for each row of sensing points in the any tactile sensing array, to determine, based on the expression statuses of each row of sensing points in the any tactile sensing array, the parameter value corresponding to the vibration encoding parameter set by the computer device for the corresponding row of sensing points, so that the computer device can generate a reference vibration waveform for a corresponding column based on the vibration encoding parameters corresponding to sensing points in a same column and the corresponding parameter values. The computer device uses the reference vibration waveform correspondingly generated for each column of sensing points as the encoding information corresponding to the tactile sensing array, so that the computer device can use encoding information corresponding to all tactile sensing arrays obtained based on the data name as the name encoding information.

For ease of understanding, another implementation of the encoding by the computer device based on the representation character is described below also by using the Chinese character " 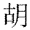 " as the representation character. In the tactile sensing array corresponding to h, sensing points in a first row and a second row of 3 rows of sensing points in a left column are in the convex state, and sensing points in a third row are in the concave state. Therefore, a reference vibration waveform corresponding to the left column may be generated based on the vibration intensity of 80, the vibration frequency of 100 Hz, and the vibration duration of 100 ms. Similarly, a reference vibration waveform corresponding to sensing points in a right column of the tactile sensing array corresponding to h may be generated based on the vibration intensity of 20, the vibration frequency of 100 Hz, and the vibration duration of 100 ms. A reference vibration waveform corresponding to sensing points in a left column of the tactile sensing array corresponding to u may be generated based on the vibration intensity of 80, the vibration frequency of 300 Hz, and the vibration duration of 300 ms, and a reference vibration waveform corresponding to sensing points in a right column of the tactile sensing array corresponding to u may be generated based on the vibration intensity of 20, the vibration frequency of 300 Hz, and the vibration duration of 300 ms. In conclusion, the computer device may use the obtained 4 reference vibration waveforms as encoding information of the Chinese character " 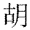 ", and the encoding information may be represented by the following vibration description information.
{80, 100, 100} and {20, 100, 100}// configured for representing Hanyu Pinyin h
{80, 300, 300} and {20, 300, 300}// configured for representing Hanyu Pinyin u

S404: Obtain an information interval between the function encoding information and the control encoding information.

S405: Perform associative splicing on the function encoding information and the control encoding information according to the information interval, use encoding information obtained through the associative splicing as the vibration encoding information corresponding to the target play control, and output a corresponding vibration based on the vibration encoding information, to prompt, through the outputted vibration, that the target play control has been selected.

In some embodiments, to ensure that a vibration effect that may be outputted by the computer device based on the function encoding information and the control encoding information may accurately prompt the operating user which play control in the multimedia interface is the currently selected play control, the computer device may add the information interval between the function encoding information and the control encoding information, so that there may be a vibration interval effect based on the vibration effect outputted by the computer device based on the vibration encoding information. For example, it is assumed that the target play control is the name control, and the data name of the media data corresponding to the name control is " 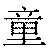 ". Based on Table 1, it may be learned that the function encoding information corresponding to the name control may be represented by {50, 30, 200} and {50, 30, 200}, and based on the description of operation S403, it is not difficult to obtain that in the data name corresponding to the name control, the encoding information of the representation character " 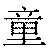 " may be represented by {20, 100, 300}, {80, 100, 100}, {20, 100, 100}, and {20, 100, 300}. In some embodiments, the name encoding information corresponding to " 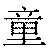 ", the data name of the media data, may be represented by the following vibration description file:
{50, 30, 200} and {50, 30, 200}// representing the name control
{0, 0, 100} // representing the information interval (or the vibration time interval), and the data name being described after the information interval
{20, 100, 300}, {80, 100, 100}, {20, 100, 100}, and {20, 100, 300}// representing the representation character " 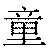 "

In some embodiments, based on the foregoing vibration reminding methods shown in FIG. 2 and FIG. 4, the computer device may perform vibration data encoding on a reference play control of a single type in the multimedia interface other than the target play control of the composite type. The reference play control is any one of the play control of the single type included in the multimedia interface. A manner in which the computer device obtains the vibration encoding information of the reference play control is described below. Specifically, the computer device may obtain the reference play control of the single type in the multimedia interface, and obtain function indication information of the reference play control based on a function of the reference play control. The function indication information of the reference play control is configured for representing a role of the reference play control performing playing control in the multimedia interface. After the computer device obtains the function indication information of the reference play control, the computer device may perform vibration data encoding based on the function indication information of the reference play control to obtain the function encoding information as the vibration encoding information of the reference play control. The vibration encoding information of any two reference play controls in the multimedia interface of the computer device is different. However, in a specific implementation, the computer device may also set a vibration waveform for the reference play control, so that the computer device can use the vibration waveform of the reference play control as the vibration encoding information of the reference play control. For a manner in which the computer device sets the vibration waveform for the reference play control, refer to the manner in which the computer device sets a function vibration waveform for the target play control in operation S203, and details are not described herein.

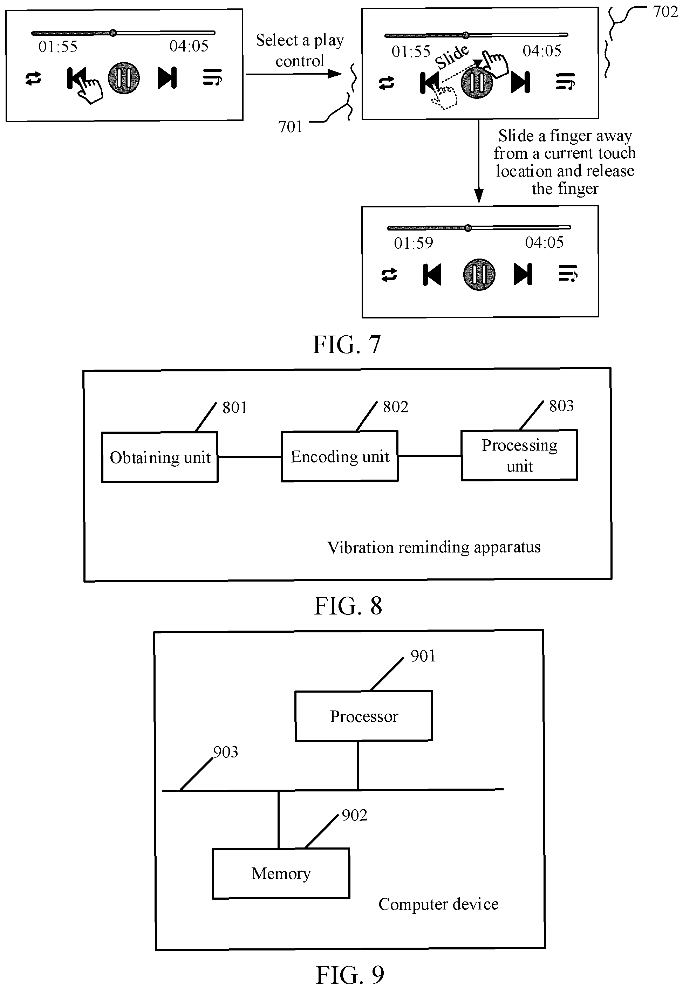

In some embodiments, the vibration reminding method may be applied to a plurality of vibration encoding scenarios related to the multimedia interface. Specifically, an applicable scenario of some embodiments of the disclosure may specifically include, but is not limited to: a scenario of performing vibration data encoding on a music play control existing in an audio playing interface, and a scenario of performing vibration data encoding on a video play control existing in a video playing interface. A vibration encoding scenario corresponding to the audio playing interface is used as an example. In other words, an interface used by the operating user is the audio playing interface. In this case, the computer device may use the vibration reminding method provided in some embodiments of the disclosure to perform vibration data encoding on the play control included in the audio playing interface to obtain corresponding vibration encoding information. After the computer device detects a selection operation for any play control in the audio playing interface, the computer device may obtain the vibration encoding information of the play control, and output, based on the vibration encoding information, a corresponding vibration effect on a device used by the operating object, so that the operating user can learn which play control the currently selected play control is when sensing the corresponding vibration effect, so that the operating user can perform a selection confirmation operation or a deselection operation on the play control based on a need of the operating user, to trigger or cancel triggering to perform a corresponding playing control function. The deselection operation may include, but is not limited to, one or both of the following: a touch location move operation (a deselection operation shown in FIG. 7), or a lift-touch operation at a location where a current play control (or any play control) is not displayed in the multimedia interface. Wave symbols (for example, a symbol marked by 701 and a symbol marked by 702) in FIG. 7 are patterns drawn to facilitate a more intuitive understanding of some embodiments of the disclosure, and are configured for expressing the vibration effect outputted based on the vibration encoding information by the computer device on the device on which the multimedia interface is located, and therefore cannot be regarded as limiting the multimedia interface.

In some embodiments of the disclosure, the computer device may generate different vibration encoding information for the play controls in the multimedia interface based on different indication information. When the play control may be distinguished based on a control function (in other words, when the play control is of a single type), the computer device performs vibration data encoding on the play control based on the control function of the play control, to obtain corresponding vibration encoding information, so that there is a difference in vibration encoding information of different play controls, while performing vibration data encoding on the play control based on only the control function may effectively reduce workload of the computer device, thereby reducing a computing resource. In addition, when the play control cannot be distinguished based on the control function, the computer device performs vibration data encoding on the play control based on at least two pieces of indication information, which may ensure to a specified extent that the vibration encoding information of different play controls is different. In this case, because different vibration encoding information may be generated for different play controls in the multimedia interface in some embodiments of the disclosure, different vibration effects may be correspondingly outputted when the different play controls are selected. Therefore, when the operating user performs the selection operation for any play control, the operating user may be reminded, by using different vibrations, that the play control is selected, so that the operating user can recognize the play control from a tactile angle, widening a dimension in which the operating object recognizes the play control in the multimedia interface, thereby reducing difficulty of recognizing the play control in the multimedia interface by the operating user, and improving human-computer interaction efficiency of operating users of a special group and the computer device. When the operating user may recognize the play control based on the vibration effect, the operating user does not need to rely on a screen reading function of the computer device, so that the computer device can avoid performing the screen reading function during media playing, reducing the workload of the computer device to a specified extent, and improving working efficiency of the computer device. In addition, the corresponding operating user may also avoid being disturbed by an outputted broadcasting voice corresponding to the screen reading function, effectively improving the use experience.

Based on related description of the foregoing embodiments of the vibration reminding method, some embodiments of the disclosure further provides a vibration reminding apparatus. The vibration reminding apparatus may be a computer program (including program code) run in the foregoing computer device. The vibration reminding apparatus may be configured to perform the vibration reminding methods shown in FIG. 2 and FIG. 4. Refer to FIG. 8, the vibration reminding apparatus includes: an obtaining unit 801, an encoding unit 802, and a processing unit 803.

The obtaining unit 801 is configured to obtain a target play control from a multimedia interface, the multimedia interface including at least one play control, and the target play control being a play control in the at least one play control with at least two pieces of indication information.

The obtaining unit 801 is further configured to obtain function indication information and control indication information of the target play control from the at least two pieces of indication information, the function indication information representing a role of the target play control performing playing control at the multimedia interface, and the control indication information of the target play control representing a playing control manner used when the target play control performs playing control in the multimedia interface.

The encoding unit 802 is configured to: perform vibration data encoding on the target play control based on the function indication information, to obtain function encoding information of the target play control, and perform vibration data encoding on the target play control based on the control indication information, to obtain control encoding information of the target play control.

The processing unit 803 is configured to: set the function encoding information and the control encoding information as vibration encoding information of the target play control, and output a corresponding vibration based on the vibration encoding information, to prompt, through the outputted vibration, that the target play control has been selected.

In some embodiments, the function indication information is configured for representing the role of the target play control performing the playing control at the multimedia interface, the target play control includes a name control, one name control corresponds to one piece of media data in the multimedia interface, and function indication information of the name control is configured for indicating to control, when the name control is selected, the multimedia interface to play the media data corresponding to the name control; and
control indication information of the name control is configured for representing to control reminding, by outputting a vibration, an operating user of a name of the media data corresponding to the selected target play control.

In some embodiments, if the target play control is the name control, obtained control encoding information of the name control includes name encoding information of the media data corresponding to the name control; and the encoding unit 802 may be further configured to:
obtain a name of the media data corresponding to the name control, and determine a tactile sensing array set corresponding to the name of the media data, the name of the media data including one or more representation characters, and each representation character being represented by an expression status corresponding to each sensing point in one or more tactile sensing arrays in the tactile sensing array set; and
separately encode each tactile sensing array in the tactile sensing array set based on the expression status of each sensing point in each tactile sensing array in the tactile sensing array set, to obtain the name encoding information of the media data corresponding to the name of the media data.

In some embodiments, the expression status of each sensing point in the tactile sensing array is a convex state or a concave state, and the encoding unit 802 may be further configured to:
obtain a forming manner of sensing points in any tactile sensing array in the tactile sensing array set, and sequentially number the sensing points in the any tactile sensing array based on the forming manner, to obtain sequence numbers corresponding to the sensing points; and
obtain, based on an expression status of each sensing point in the any tactile sensing array, a sequence number corresponding to a sensing point whose expression status is the convex state, and encode the any tactile sensing array based on the obtained sequence number.

In some embodiments, a forming manner of the sensing points in the tactile sensing array is a forming manner of three rows and two columns, and the expression status of each sensing point in the tactile sensing array is a convex state or a concave state; and the encoding unit 802 may be further configured to:
obtain a preset vibration encoding parameter for each row of sensing points in any tactile sensing array in the tactile sensing array set, the preset vibration encoding parameter for each row of sensing points including any one of vibration intensity, a vibration frequency, or vibration duration, and vibration encoding parameters for sensing points at different rows being different;
determine, based on the expression status of each sensing point in the any tactile sensing array, a parameter value corresponding to the vibration encoding parameter for each row of sensing points;
generate a reference vibration waveform for each column in the any tactile sensing array based on a vibration encoding parameter and a parameter value that correspond to each sensing point in each column in the any tactile sensing array; and use the reference vibration waveform for each column in the any tactile sensing array as name encoding information corresponding to the any one tactile sensing array.

In some embodiments, the function indication information is configured for representing the role of the target play control performing the playing control at the multimedia interface, the target play control includes a mode control, and function indication information of the mode control is configured for indicating to switch, when the mode control is selected, one or more circulation modes supported by the multimedia interface; and
control indication information of the mode control is configured for representing one or both of the following: performing, in the multimedia interface, playing control on media data in the multimedia interface by using a current circulation mode indicated by the mode control; or performing, in the multimedia interface, playing control on the media data in the multimedia interface by using a next circulation mode indicated by the mode control.

In some embodiments, if the target play control is the mode control, obtained control encoding information of the mode control includes: mode encoding information corresponding to any circulation mode in the one or more circulation modes supported by the multimedia interface; and the encoding unit 802 may be further configured to:
obtain a vibration encoding parameter and a corresponding parameter value that are preset for the one or more circulation modes supported by the multimedia interface; generate a target vibration waveform based on the obtained vibration encoding parameter and corresponding parameter value, the vibration encoding parameter including one or more of vibration intensity, a vibration frequency, or vibration duration; and
generate, based on the target vibration waveform, the mode encoding information of any circulation mode supported by the multimedia interface.

In some embodiments, the circulation mode supported by the multimedia interface is a mode of cyclically playing media data added to a playlist, and the one or more circulation modes supported by the multimedia interface include a part of or all of a single circulation mode, a list circulation mode, or a random circulation mode; and the encoding unit 802 may be further configured to:
obtain a quantity of target vibration waveforms required for the any circulation mode supported by the multimedia interface, quantities of target vibration waveforms required for different circulation modes supported by the multimedia interface being different; and
use a corresponding quantity of target vibration waveforms as the mode encoding information of the any circulation mode.

In some embodiments, the processing unit 803 may be configured to:
obtain an information interval between the function encoding information and the control encoding information; and
perform associative splicing on the function encoding information and the control encoding information based on the information interval and use encoding information obtained through the associative splicing as the vibration encoding information corresponding to the target play control.

In some embodiments, the processing unit 803 may be further configured to:
obtain a reference play control of a single type in the multimedia interface, and obtain, based on a function of the reference play control, function indication information of the reference play control; and
perform vibration data encoding on the function indication information of the reference play control, and use function encoding information of the obtained reference play control as vibration encoding information of the reference play control,
the multimedia interface including a plurality of reference play controls of a single type, and vibration encoding information of any two reference play controls being different.

In some embodiments, the obtaining unit 801 may be configured to:
determine, when any play control in the multimedia interface is selected, whether the any play control is the mode control; and
determine, when it is determined that the any play control is the mode control, the any play control as the target play control, and use one or both of a current circulation mode and a next circulation mode in the multimedia interface as control indication information of the any play control; or
determine, when it is determined that the any play control is the name control, the any play control as the target play control, and use a data name of the media data indicated by the name control as control indication information of the any play control.

In some embodiments of the disclosure, the obtaining unit 801 may determine the function indication information and the control indication information from the at least two pieces of indication information included in the target play control, so that the encoding unit 802 can perform the vibration data encoding on the target play control based on the function indication information and the control indication information sequentially to obtain the corresponding function encoding information and the control encoding information, and when the target play control is selected, the vibration can be outputted according to the function encoding information and the control encoding information separately to remind the operating user of the selection of the target play control, so that the vibration reminding apparatus implements effective reminding of the selected play control without interrupting playing of the media data in the multimedia interface. In addition, because the vibration encoding information of the target play control is obtained through the vibration data encoding based on the at least two pieces of indication information, the vibration encoding information of the target play control includes rich information related to the play control, which may ensure that the vibration encoding information of the different target play controls is different, thereby ensuring that the vibrations outputted based on the vibration encoding information of the different target play controls are different, so that the operating user can effectively distinguish between the different play controls based on the different received vibrations, thereby making a prompt emitted by the computer device to the operating user more accurate and effective, and improving accuracy of vibration reminding performed by the computer device.

FIG. 9 is a schematic diagram of a structure of a computer device according to some embodiments of the disclosure. The computer device shown in FIG. 9 may include one or more processors 901 and a memory 902. A communication connection may be established between the processor 901 and the memory 902 through a bus 903. The memory 902 is configured to store a computer program, and the computer program includes program instructions. The processor 901 is configured to execute the program instructions stored in the memory 902.

The memory 902 may include a volatile memory, for example, a random-access memory (RAM); the memory 902 may include a non-volatile memory, for example, a flash memory, or a solid-state drive (SSD); and the memory 902 may include a combination of the foregoing types of memories.

The processor 901 may be a central processing unit (CPU). The processor 901 may further include a hardware chip. The foregoing hardware chip may be an application-specific integrated circuit (ASIC), a programmable logic device (PLD), or the like. The PLD may be a field-programmable gate array (FPGA), generic array logic (GAL), or the like. The processor 901 may be a combination of the foregoing structures.

In some embodiments of the disclosure, the memory 902 is configured to store the computer program, and the computer program includes the program instructions. The processor 901 is configured to execute the program instructions stored in the memory 902, to implement the operations of the foregoing corresponding methods in FIG. 2 and FIG. 4.

In some embodiments, the processor 901 is configured to invoke the computer programs, to perform the following operations:
obtaining a target play control from a multimedia interface, the multimedia interface including at least one play control, and the target play control being a play control in the at least one play control with at least two pieces of indication information;
obtaining function indication information and control indication information of the target play control from the at least two pieces of indication information, the control indication information of the target play control representing a playing control manner used when the target play control performs playing control in the multimedia interface;
performing vibration data encoding on the target play control based on the function indication information, to obtain function encoding information of the target play control, and performing vibration data encoding on the target play control based on the control indication information, to obtain control encoding information of the target play control; and
setting the function encoding information and the control encoding information as vibration encoding information of the target play control, and outputting a corresponding vibration based on the vibration encoding information, to prompt, through the outputted vibration, that the target play control has been selected.

In this embodiment of the disclosure, the computer device may determine the function indication information and the control indication information from the at least two pieces of indication information included in the target play control, to perform the vibration data encoding on the target play control based on the function indication information and the control indication information sequentially to obtain the corresponding function encoding information and the control encoding information, and when the target play control is selected, the vibration is outputted according to the function encoding information and the control encoding information separately to remind the operating user of the selection of the target play control, so that the computer device implements effective reminding of the selected play control without interrupting playing of the media data in the multimedia interface. In addition, because the vibration encoding information of the target play control is obtained through the vibration encoding based on the at least two pieces of indication information, the vibration encoding information of the target play control includes rich information related to the play control, which may ensure that the vibration encoding information of the different target play controls is different, thereby ensuring that the vibrations outputted based on the vibration encoding information of the different target play controls are different, so that the operating user can effectively distinguish between the different play controls based on the different received vibrations, thereby making a prompt emitted by the computer device to the operating user more accurate and effective, and improving accuracy of vibration reminding performed by the computer device.

The disclosure further provides a computer storage medium, having one or more computer programs corresponding to the foregoing vibration reminding method and stored therein. When one or more processors load and execute the one or more computer programs, the description of the vibration reminding method in the embodiments may be implemented, and details are not described herein again. Description of beneficial effects of using the same method is not described herein again. The program instructions may be deployed and executed on one or more devices capable of communicating with each other.

According to an aspect of the disclosure, a program product or a computer program is further provided. The program product includes a computer program, and the computer program is stored in a computer storage medium. A processor of a computer device reads the computer program from the computer storage medium, and executes the computer program, causing the computer device to perform the methods provided in the various exemplary implementations according to the foregoing embodiments of the vibration reminding methods shown in FIG. 2 and FIG. 4.

A person of ordinary skill in the art may understand that all or a part of the processes of the method in the foregoing embodiment may be implemented by a computer program instructing relevant hardware. The computer program may be stored in a computer storage medium. When the computer program is run, the processes of the embodiment of the foregoing vibration reminding method may be included. The computer storage medium may include: a magnetic disk, an optical disc, a read-only memory (ROM), or a random access memory (RAM), or the like.

The foregoing descriptions are merely some embodiments of the disclosure, and are not intended to limit the scope of the disclosure. A person skilled in the art may understand all or some processes of the foregoing embodiments, and equivalent modifications made according to the claims of the disclosure shall still fall within the scope of the present disclosure.

## Claims

1. A vibration reminding method, performed by a computer device, comprising:
obtaining a play control from a multimedia interface, the multimedia interface comprising at least one play control, and the play control being a play control in the at least one play control with at least two pieces of indication information in the at least one play control;
determiningfunction indication information and control indication information of a play control from the at least two pieces of indication information of the play control, the function indication information indicating a function of the play control while performing playing control at the multimedia interface, and the control indication information of the play control indicating a playing control manner used when the play control performs playing control in the multimedia interface;
performing vibration data encoding based on the function indication information, to obtain function encoding information of the play control, and performing vibration data encoding based on the control indication information, to obtain control encoding information of the play control; and
settingthe function encoding information and the control encoding information as vibration encoding information of the play control, and outputting a corresponding vibration based on the vibration encoding information, to prompt, through the outputted vibration, that the play control has been selected.

2. The method according to claim 1, wherein the play control comprises a name control, one name control corresponds to one piece of media data in the multimedia interface;
the function indication information of the name control is configured to control, when the name control is selected, the multimedia interface to play the media data corresponding to the name control; and
the control indication information of the name control is configured to control reminding, by outputting a vibration, an operating user of a name of the media data corresponding to the selected play control.

3. The method according to claim 2, wherein if the play control is the name control, obtained control encoding information of the name control comprises name encoding information of the media data corresponding to the name control; and
wherein the performing vibration data encoding on the play control based on the control indication information comprises:
obtaining a name of the media data corresponding to the name control, and determining a tactile sensing array set corresponding to the name of the media data, the name of the media data comprising one or more representation characters, and each representation character being represented by an expression status corresponding to each sensing point in one or more tactile sensing arrays in the tactile sensing array set; and
separately encoding each tactile sensing array in the tactile sensing array set based on the expression status of each sensing point in each tactile sensing array in the tactile sensing array set, to obtain the name encoding information of the media data corresponding to the name of the media data.

4. The method according to claim 3, wherein the expression status of each sensing point in each tactile sensing array is a convex state or a concave state; and
the separately encoding each tactile sensing array in the tactile sensing array set based on the expression status of each sensing point in each tactile sensing array in the tactile sensing array set comprises:
obtaining a forming manner of sensing points in any tactile sensing array in the tactile sensing array set, and sequentially numbering the sensing points in the any tactile sensing array based on the forming manner, to obtain sequence numbers corresponding to the sensing points; and
obtaining, based on an expression status of each sensing point in the any tactile sensing array, a sequence number corresponding to a sensing point whose expression status is the convex state, and encoding the any tactile sensing array based on the obtained sequence number.

5. The method according to claim 3, wherein a forming manner of the sensing points in the tactile sensing array is a forming manner of three rows and two columns, and the expression status of each sensing point in the tactile sensing array is a convex state or a concave state; and
the separately encoding each tactile sensing array in the tactile sensing array set based on the expression status of each sensing point in each tactile sensing array in the tactile sensing array set comprises:
obtaining a preset vibration encoding parameter for each row of sensing points in any tactile sensing array in the tactile sensing array set, the preset vibration encoding parameter for each row of sensing points comprising any one of vibration intensity, a vibration frequency, and vibration duration, and vibration encoding parameters for sensing points at different rows being different;
determining, based on the expression status of each sensing point in the any tactile sensing array, a parameter value corresponding to the vibration encoding parameter for each row of sensing points;
generating a reference vibration waveform for each column in the any tactile sensing array based on a vibration encoding parameter and a parameter value that correspond to each sensing point in each column in the any tactile sensing array; and
using the reference vibration waveform for each column in the any tactile sensing array as name encoding information corresponding to the any one tactile sensing array.

6. The method according to claim 1, wherein the play control comprises a mode control, and the function indication information of the mode control is configured for indicating to switch, when the mode control is selected, one or more circulation modes supported by the multimedia interface; and
the control indication information of the mode control is configured for representing at least one of the following:
performing, in the multimedia interface, playing control on media data in the multimedia interface by using a circulation mode currently indicated by the mode control; or
performing, in the multimedia interface, playing control on the media data in the multimedia interface by using a next circulation mode indicated by the mode control.

7. The method according to claim 6, wherein if the play control is the mode control, obtained control encoding information of the mode control comprises: mode encoding information corresponding to any circulation mode in the one or more circulation modes supported by the multimedia interface; and
the performing vibration data encoding on the play control based on the control indication information, to obtain control encoding information of the play control comprises:
obtaining a vibration encoding parameter and a corresponding parameter value that are preset for the one or more circulation modes supported by the multimedia interface;
generating a target vibration waveform based on the obtained vibration encoding parameter and corresponding parameter value, the vibration encoding parameter comprising one or more of vibration intensity, a vibration frequency, or vibration duration; and
generating, based on the target vibration waveform, the mode encoding information of any circulation mode supported by the multimedia interface.

8. The method according to claim 7, wherein the circulation mode supported by the multimedia interface is a mode of cyclically playing media data added to a playlist, and the one or more circulation modes comprise a part of or all of a single circulation mode, a list circulation mode, or a random circulation mode; and
the generating, based on the target vibration waveform, the mode encoding information of any circulation mode supported by the multimedia interface comprises:
obtaining a quantity of target vibration waveforms required for the any circulation mode supported by the multimedia interface, quantities of target vibration waveforms required for different circulation modes supported by the multimedia interface being different; and
using a corresponding quantity of target vibration waveforms as the mode encoding information of the any circulation mode.

9. The method according to claim 1, wherein the setting the function encoding information and the control encoding information as vibration encoding information of the play control comprises:
obtaining an information interval between the function encoding information and the control encoding information; and
performing associative splicing on the function encoding information and the control encoding information based on the information interval, and setting encoding information obtained through the associative splicing as the vibration encoding information corresponding to the play control.

10. The method according to any one of claims 1 to 9, wherein the method further comprises:
obtaining a reference play control of a single type in the multimedia interface, and obtaining, based on a function of the reference play control, function indication information of the reference play control; and
performing vibration data encoding on the function indication information of the reference play control, and using function encoding information of the obtained reference play control as vibration encoding information of the reference play control,
the multimedia interface comprising a plurality of reference play controls of the single type, and vibration encoding information of any two reference play controls being different.

11. The method according to any one of claims 1 to 9, wherein the obtaining the play control from the multimedia interface comprises:
determining, when any play control in the multimedia interface is selected, whether the any play control is the mode control; and
determining, when it is determined that the any play control is the mode control, the any play control as the play control, and using one or both of the current circulation mode and the next circulation mode in the multimedia interface as control indication information of the any play control; or
determining, when it is determined that the any play control is the name control, the any play control as the play control, and using a data name of the media data indicated by the name control as control indication information of the any play control.

12. A vibration reminding apparatus, comprising:
an obtaining unit, configured to obtain a play control from a multimedia interface, the multimedia interface comprising at least one play control, and the play control being a play control in the at least one play control with at least two pieces of indication information in the at least one play control,
the obtaining unit being further configured to determine function indication information and control indication information of a play control from the at least two pieces of indication information of the play control, the function indication information indicating a function of the play control while performing playing control at the multimedia interface, and the control indication information of the play control indicating a playing control manner used when the play control performs playing control in the multimedia interface;
an encoding unit, configured to: perform vibration data encoding based on the function indication information, to obtain function encoding information of the play control, and perform vibration data encoding based on the control indication information, to obtain control encoding information of the play control; and
a processing unit, configured to: set the function encoding information and the control encoding information as vibration encoding information of the play control, and output a corresponding vibration based on the vibration encoding information, to prompt, through the outputted vibration, that the play control has been selected.

13. The apparatus according to claim 12, wherein the play control comprises a name control, one name control corresponds to one piece of media data in the multimedia interface, and function indication information of the name control is configured for indicating to control, when the name control is selected, the multimedia interface to play the media data corresponding to the name control; and
control indication information of the name control is configured to control reminding, by outputting a vibration, an operating user of a name of the media data corresponding to the selected play control.

14. The apparatus according to claim 13, wherein if the play control is the name control, obtained control encoding information of the name control comprises name encoding information of the media data corresponding to the name control; and
the encoding unit is configured to: obtain a name of the media data corresponding to the name control, and determine a tactile sensing array set corresponding to the name of the media data, the name of the media data comprising one or more representation characters, and each representation character being represented by an expression status corresponding to each sensing point in one or more tactile sensing arrays in the tactile sensing array set; and
separately encode each tactile sensing array in the tactile sensing array set based on the expression status of each sensing point in each tactile sensing array in the tactile sensing array set, to obtain the name encoding information of the media data corresponding to the name of the media data.

15. The apparatus according to claim 12, wherein the play control comprises a mode control, and the function indication information of the mode control is configured for indicating to switch, when the mode control is selected, one or more circulation modes supported by the multimedia interface; and
wherein the control indication information of the mode control is configured for representing at least one of the following: performing, in the multimedia interface, playing control on media data in the multimedia interface by using a circulation mode currently indicated by the mode control; or performing, in the multimedia interface, playing control on the media data in the multimedia interface by using a next circulation mode indicated by the mode control.

16. The apparatus according to claim 15, wherein if the play control is the mode control, obtained control encoding information of the mode control comprises: mode encoding information corresponding to any circulation mode in the one or more circulation modes supported by the multimedia interface; and
the encoding unit is configured to: obtain a vibration encoding parameter and a corresponding parameter value that are preset for the one or more circulation modes supported by the multimedia interface; generate a vibration waveform according to the obtained vibration encoding parameter and corresponding parameter value, the vibration encoding parameter comprising one or more of vibration intensity, a vibration frequency, or vibration duration; and
generate, based on the vibration waveform, the mode encoding information of any circulation mode supported by the multimedia interface.

17. A computer device, comprising: a processor and a memory, the processor being connected to the memory, the memory being configured to store a computer program, the computer program comprising program instructions, and the processor being configured to invoke the program instructions, to perform the method according to any one of claims 1 to 11.

18. A computer storage medium, having a computer program stored therein, the computer program comprising program instructions, the program instructions, when executed by a processor, causing the processor to perform the method according to any one of claims 1 to 11.
